**Europäisches Patentamt**

**European Patent Office**

**Office européen des brevets**

(19)

(11) Veröffentlichungsnummer: **0 165 459**
**B1**

(12) **EUROPÄISCHE PATENTSCHRIFT**

(45) Veröffentlichungstag der Patentschrift:
26.07.89

(51) Int. Cl.⁴: **G 01 S 3/48, G 01 S 3/04**

(21) Anmeldenummer: **85105901.4**

(22) Anmeldetag: **14.05.85**

(54) Interferometerpeilanordnung.

(30) Priorität: 24.05.84 DE 3419342

(43) Veröffentlichungstag der Anmeldung:
27.12.85 Patentblatt 85/52

(45) Bekanntmachung des Hinweises auf die Patenterteilung:
26.07.89 Patentblatt 89/30

(84) Benannte Vertragsstaaten:
CH DE FR GB IT LI

(56) Entgegenhaltungen:
DE-A- 1 246 054

ISA TRANSACTIONS, Band 22, Nr. 4, 1983, Seiten 77-83, Research Triangle Park, NC, US; M.Z. PARRA: "White sands missile range: a phase difference measuring tracking system"

(73) Patentinhaber: Licentia Patent-Verwaltungs-GmbH, Theodor-Stern-Kai 1, D-6000 Frankfurt/Main 70 (DE)

(72) Erfinder: Bodemann, Gerhard, Dipl.-Ing., Eichengrund 101, D-7900 Ulm (DE)
Erfinder: Fliege, Hans-Joachim, Dipl.-Ing., Erlenweg 7, D-7906 Blaustein (DE)
Erfinder: Saur, Hermann, Dipl.-Ing. (FH), Hölderlingweg 3, D-7900 Ulm (DE)

(74) Vertreter: Schulze, Harald Rudolf, Dipl.-Ing. et al, Licentia Patent-Verwaltungs-GmbH Theodor-Stern-Kai 1, D-6000 Frankfurt/Main 70 (DE)

## Beschreibung

Die Erfindung betrifft eine Interferometerpeilanordnung der im Oberbegriff des Patentanspruchs 1 angegebenen Art.

Derartige Anordnungen ermöglichen Peilungen mit unterschiedlichen Basislängen. Bei Grossbasispeilungen, bei denen über Messbasen grösser als eine halbe Wellenlänge gemessen wird, sind die Messwerte zwar sehr genau, aber zunächst mehrdeutig. Sie können mit Hilfe von Messwerten aus Kleinbasispeilungen zu eindeutigen Werten ergänzt werden. Bei bekannten Anordnungen wird hierzu ein Zweikanalpeiler in zeitlich aufeinanderfolgenden Schritten abwechselnd mit einem Antennenpaar aus einer ersten und einer zweiten Antennenzeile verbunden und sukzessive durch Vergrösserung der Basis die Peilgenauigkeit erhöht.

Dies setzt aber voraus, dass sich die Signalsituation während der Zeit, die für den kompletten Peilvorgang erforderlich ist, nicht oder nicht wesentlich ändert. Für die Erfassung sehr kurzer Signale mit voller Genauigkeit sind die bekannten Anordnungen folglich nicht geeignet.

Zur Peilung sehr kurzer Signale könnten gleichzeitige Peilungen über alle Messbasen mittels eines Vielkanalempfängers erfolgen, wie er für verschiedene Antennenanordnungen in der DE-PS 1 516 876 beschrieben ist. Bei n Antennen in jeder Zeile und einer Referenzantenne im Kreuzungspunkt wären dann $2n + 1$ Kanäle mit identischem elektrischem Verhalten erforderlich. Diese Forderung nach exaktem Gleichlauf aller Kanäle erschwert jedoch die Realisierbarkeit eines solchen Vielkanalempfängers erheblich.

Aufgabe der vorliegenden Erfindung ist es, eine Interferometerpeilanordnung anzugeben, die auf einfachere Weise die Peilung auch sehr kurzer Signale mit voller Genauigkeit ermöglicht.

Die Erfindung ist im Patentanspruch 1 beschrieben. Die Unteransprüche enthalten vorteilhafte Ausführungen und Weiterbildungen der Erfindung.

Die Zahl der Empfangskanäle ist bei der erfindungsgemässen Anordnung mit 3n Kanälen zwar grösser als bei einem Vielkanalempfänger mit $2n + 1$ Kanälen, der erforderliche Gleichlauf in Verstärkung und Phase muss aber nur über die jeweils drei Empfangskanäle der einzelnen Empfänger erreicht werden, da jeder Empfänger unabhängig von den anderen einen Peilwert ermittelt. Dreikanalige Peilempfänger mit guten Gleichlaufeigenschaften der Kanäle stehen in technisch ausgereifter Form für alle in Frage kommenden Frequenzbereiche zur Verfügung. Die mehreren Empfänger der Anordnung werden parallel kommandiert. Die Probenentnahme aus den Kanalspannungen muss gleichfalls nur innerhalb der drei Kanäle eines Empfängers absolut gleichzeitig erfolgen, während für die verschiedenen Empfänger untereinander nur eine quasigleichzeitige Probenentnahme in dem Sinne eingehalten werden muss, dass die Zeitdifferenz in der Probenentnahme zwischen den einzelnen Empfängern klein sein soll gegenüber dem Kehrwert der Empfangsbandbreite. Die neben der Referenzantenne an einen Empfänger angeschlossenen Antennnen haben zweckmässigerweise den gleichen Abstand zur Referenzantenne, da hierbei innerhalb eines Empfängers eine einheitliche Auswertung möglich ist und die aus den beiden mit der Referenzantenne gebildeten Peilbasen die gleiche Genauigkeit der Peilwerte liefern.

Ein weiterer erheblicher Vorteil ist in der vielseitigen Verwendbarkeit der einzelnen Peilempfänger der erfindungsgemässen Anordnung zu sehen. Im Grunde kann jeder der Peilempfänger an jedem beliebigen Peilantennensystem, das drei Hochfrequenzspannungen abgibt, betrieben werdern, wie z.B. an einem Adcock-System mit Antennenverteiler. Gemäss einer Weiterbildung der Erfindung ist daher auch vorgesehen, dass zumindest einer der Peilempfänger auf ein anderes Peilantennensystem umschaltbar ist. Beispielsweise kann die Kleinbasispeilung wahlweise über die Interferometerkleinbasen oder über eine Adcock-Antennenanordnung erfolgen. Oder der an die grösste Basis der Interferometer-Antennenanordnung angeschlossene Empfänger kann unter Verzicht auf die letzte Stufe der Peilgenauigkeit an einem anderen Antennensystem betrieben werden. Die Empfänger können zum anderweitigen Einsatz auch ganz von dem Interferometer-Antennensystem gelöst werden und erst für eine neue Peilaufgabe das Antennensystem wieder zu der erfindungsgemässen Anordnung ergänzen.

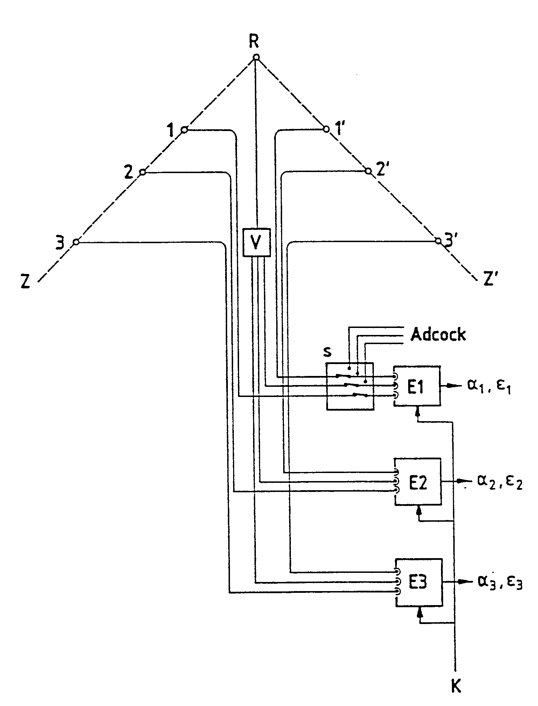

Die Erfindung ist nachfolgend an einem Ausführungsbeispiel unter Bezugnahme auf die Abbildung noch veranschaulicht.

Das Antennensystem der Interferometerpeilanordnung besteht aus zwei senkrecht aufeinander stehenden Antennenzeilen Z, Z' mit je drei Einzelantennen 1, 2, 3 bzw. 1', 2', 3' und einer Referenzantenne R im Kreuzungspunkt der Zeilen. Die Referenzantenne ist an eine Verteilerschaltung V angeschlossen, deren Ausgänge an je einen Kanal der dreikanaligen Empfänger E1, E2, E3 führen. Die beiden anderen Kanäle des Empfängers E1 sind mit den Einzelantennen 1 und 1' verbunden, deren Abstände von der Referenzantenne kleiner als eine halbe Betriebswellenlänge und untereinander gleich sind. In entsprechender Weise sind die Antennen 2, 2' mit dem Empfänger E2 und die Antennen 3, 3' mit dem Empfänger E3 verbunden, wobei die Abstände der Einzelantennen zur Referenzantenne grösser als eine halbe Betriebswellenlänge sind. Die Empfänger werden über eine Kommandierleitung K gemeinsam kommandiert und auf gleichzeitige oder zumindest quasigleichzeitige Probenentnahme synchronisiert. Die Leitung K kann auch eine Fernkommandierleitung sein. Der Empfänger E1 liefert als eindeutiges Peilergebnis die Einfallsrichtung einer Welle als Azimutwinkel $\alpha_1$ und Elevationswinkel $E_1$. Die Peilergebnisse

der Empfänger E2 und E3 sind aufgrund der grösseren Peilbasen genauer, jedoch nicht eindeutig. Eindeutigkeit kann erreicht werden durch Vergleich der Ergebnisse mit den eindeutigen Peilwerten aus der Kleinbasispeilung des Empfängers E1.

Bei insgesamt sieben Einzelantennen hat die Peilanordnung neun Empfangskanäle. Durch die Aufteilung in mehrere dreikanalige Empfänger ergeben sich geringere Gleichlaufanforderungen zwischen den verschiedenen Empfängern, da die Ermittlung der einzelnen Peilergebnissse unabhängig voneinander erfolgt, sowie eine hohe Verwendungsflexibilität. Dies ist angedeutet durch die Möglichkeit, den Empfänger E1 über eine Umschalteinrichtung S an ein anderes Peilantennensystem, beispielsweise eine Adcock-Anordnung , anzuschliessen und die Kleinbasispeilung nach dem Adcock-Prinzip vorzunehmen, evtl. auch in Verbindung mit einem Sichtfunkpeiler. Der Empfänger E3 kann unter Inkaufnahme verringerter Peilgenauigkeit vollständig aus der Anlage entfernt und anderweitig eingesetzt werden, ohne dass die Funktion der anderen Empfänger in irgendeiner Weise beeinflusst würde.

## Patentansprüche

1. Interferometerpeilanordnung mit mehreren, auf zwei sich kreuzenden Antennenzeilen angeordneten Einzelantennnen mit einer Referenzantenne im Kreuzungspunkt der Zeilen, dadurch gekennzeichnet, dass mehrere dreikanalige Peilempfänger (E1, E2, E3) mit den Antennen in der Weise verbunden sind, dass die Antennenspannung der Referenzantenne (R) über eine Verteilerschaltung (V) an einen Kanal jedes Peilempfängers geführt ist und die beiden anderen Kanäle jedes Peilempfängers (E1, E2, E3) jeweils mit je einer Antenne (1, 1' bzw. 2, 2' bzw. 3, 3') aus jeder Antennenzeile (Z, Z') verbunden sind, und dass über eine gemeinsame Kommandiereinrichtung die Probenentnahme in allen Empfängern gleichzeitig erfolgt.

2. Anordnung nach Anspruch 1, dadurch gekennzeichnet, dass die mit den beiden anderen Kanälen eines Peilempfängers verbundenen Antennen den gleichen Abstand zur Referenzantenne haben.

3. Anordnung nach Anspruch 1 oder 2, dadurch gekennzeichnet, dass mindestens einer der Empfänger auf ein anderes Peilantennensystem umschaltbar ist.

## Claims

1. Interferometric direction-finding arrangement with several individual aerials arranged on mutually crossing aerial lines and a reference aerial at the intersection of the lines, characterised thereby, that several three-channel direction-finding receivers (E1, E2, E3) are connected with the aerials in such a manner that the aerial voltage of the reference aerial (R) the conducted by way of a distributor circuit (V) to one channel of each direction-finding receiver and both the other channels of each direction-finding receiver (E1, E2, E3) are each connected with a respective aerial (1, 1' or 2, 2' or 3, 3') from each aerial line (Z, Z') and that the sampling takes place simultaneously in all receivers by way of a common command equipment.

2. Arrangement according to claim 1, characterised thereby, that the aerials, which are connected with both the other channels of a direction-finding receiver, haver the same spacing from the reference aerial.

3. Arrangement according to claim 1 or 2, characterised thereby, that at last one of the receivers is switchable over to another direction-finding aerial system.

## Revendications

1. Dispositif de goniométrie interférométrique, comprenant plusieurs anntennes élémentaires installées sur deux lignes d'antennes qui se croisent, de même qu'une antenne de référence à l'intersection des lignes, caractérisé en ce que plusieurs récepteurs goniométriques (E1, E2, E3) à trois canaux sont reliés aux antennes, de manière que la tension d'antenne de l'antenne de référence (R) soit appliquée à travers un circuit de réparation (V) à un canal de chaque récepteur et que les deux autres canaux de chaque récepteur (E1, E2, E3) soient reliés chacun à une antenne (1, 1' ou 2, 2' ou 3, 3') de chaque ligne d'antennes (Z, Z'), et que l'échantillonage dans tous les récepteurs s'effectue simultanément au moyen d'un dispositif de commande commun.

2. Dispositif selon la revendication 1, caractérisé en ce que les antennes reliées aux deux autres canaux d'un récepteur ont la même distance à l'antenne de référence.

3. Dispositif selon la revendication 1 ou 2, caractérisé en ce que l'un au moins des récepteurs est commutable sur un autre système d'antennes goniométrique.